(19) Europäisches Patentamt
European Patent Office
Office européen des brevets

(11) **EP 4 557 803 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
**H04W 24/02** *(2009.01)*      **H04W 24/08** *(2009.01)*

(21) Application number: **23838761.7**

(22) Date of filing: **30.06.2023**

(86) International application number:
**PCT/CN2023/104867**

(87) International publication number:
**WO 2024/012269 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.07.2022 CN 202210815638**

(71) Applicant: **Nio Technology (Anhui) Co., Ltd
Hefei City, Anhui 230601 (CN)**

(72) Inventors:
• WANG, Cheng
  Hefei, Anhui 230601 (CN)
• HAN, Yiqi
  Hefei, Anhui 230601 (CN)
• SHEN, Qizhuang
  Hefei, Anhui 230601 (CN)
• XIAO, Bohong
  Hefei, Anhui 230601 (CN)

(74) Representative: **Vossius & Partner
Patentanwälte Rechtsanwälte mbB
Siebertstrasse 3
81675 München (DE)**

(54) **COMMUNICATION ENVIRONMENT DETERMINATION METHOD, DATA PROCESSING APPARATUS, VEHICLE, AND STORAGE MEDIUM**

(57) The present disclosure relates to a communication environment determination method based on Ultra Wide Band, a data processing device for determination of a type of communication environment, a vehicle, and a storage medium. The method comprises: A. determining, based on a received Ultra Wide Band signal, a channel impulse response in current Ultra Wide Band communication process; B. calculating, based on the channel impulse response, channel time dispersion parameters; and C. inputting the channel time dispersion parameters into an algorithm model, and generating first determination information indicating current communication environment type based on the algorithm model.

```
┌─────────────────┐
│      S110       │
└─────────────────┘
         │
         ▼
┌─────────────────┐
│      S120       │
└─────────────────┘
         │
         ▼
┌─────────────────┐
│      S130       │
└─────────────────┘
         ┆
         ▼
┌ ─ ─ ─ ─ ─ ─ ─ ─ ┐
│      S140       │
└ ─ ─ ─ ─ ─ ─ ─ ─ ┘

        10
```

FIG. 1

EP 4 557 803 A1

**Description**

**TECHNICAL FIELD**

The present disclosure relates to the technical field of Ultra Wide Band, and in particular to a communication environment determination method based on Ultra Wide Band, a data processing device for determination of communication environment type, a vehicle, and a storage medium.

**BACKGROUND**

Currently, it is necessary to determine the type of environment in which a device is located (such as indoor or outdoor) in many application scenarios. Some of the prior art utilizes smartphones to detect the number of surrounding base stations, and determines whether a mobile phone is located indoors or outdoors based on the assumption that there are more base stations detected outdoors than indoors. Due to the widespread use of microcellular and pico-cellular technologies for networking in modern communication systems, the above assumption is not always valid. In addition, some of the prior art utilizes information provided by multiple types of sensors (such as road signs, magnetic field strength, road texture, temperature, light intensity, odor, contamination detection, etc.) to comprehensively determine the type of environment. Since this method requires visual recognition and other technologies, the system is sophisticated and costly.

In view of the foregoing, it is necessary to propose an improved communication environment determination method.

**SUMMARY**

The embodiments of the present disclosure provide an improved communication environment determination method, a data processing device, a vehicle, and a storage medium for utilizing Ultra Wide Band technology for channel detection and for determination of the communication environment type based on the channel detection results.

According to one aspect of the present disclosure, a communication environment determination method based on Ultra Wide Band is provided, which comprises the following steps: A. determining, based on a received Ultra Wide Band signal, a channel impulse response in a current Ultra Wide Band communication process; B. calculating, based on the channel impulse response, channel time dispersion parameters; and C. inputting the channel time dispersion parameters into an algorithm model, and generating first determination information indicating a current communication environment type based on the algorithm model.

As an alternative of or supplement to the above solution, the method according to an embodiment of the present disclosure further comprises: D. determining positioning model parameters for the current communication environment type based on the first determination information.

As an alternative of or supplement to the above solution, in the method according to an embodiment of the present disclosure, the channel time dispersion parameters comprise one or more of the following: number of multipath components, amplitude and delay of each multipath component, mean excess delay, RMS delay spread, and maximum multipath delay.

As an alternative of or supplement to the above solution, in the method according to an embodiment of the present disclosure, the algorithm model comprises a machine learning model, wherein the machine learning model is built based on a training dataset containing samples of channel time dispersion parameter and labeling information representing the communication environment type corresponding to the samples.

As an alternative of or supplement to the above solution, in the method according to an embodiment of the present disclosure, the algorithm model comprises a threshold classification model, and step C comprises: C1. obtaining a line-of-sight type of the current Ultra Wide Band communication, wherein the line-of-sight type comprises line-of-sight propagation and non-line-of-sight propagation; C2. determining a dispersion parameter threshold corresponding to the line-of-sight type; C3. comparing the channel time dispersion parameter with the dispersion parameter threshold; and C4. determining the current communication environment type based on comparison results.

As an alternative of or supplement to the above solution, in the method according to an embodiment of the present disclosure, the thresholds for the mean excess delay and RMS delay spread for non-line-of-sight propagation are greater than the thresholds for the mean excess delay and RMS delay spread for line-of-sight propagation, respectively.

As an alternative of or supplement to the above solution, in the method according to an embodiment of the present disclosure, the current communication environment types include indoor and outdoor.

According to another aspect of the present disclosure, a data processing device for determination of communication environment type is provided, comprising: a memory; a processor; and a computer program stored on the memory and executable on the processor, wherein execution of the computer program causes the following steps to be performed: A. determining, based on a received Ultra Wide Band signal, a channel impulse response in a current Ultra Wide Band communication process; B. calculating, based on the channel impulse response, a channel time dispersion parameter; and C. inputting the channel time dispersion parameter into an algorithm model, and generating first determination information indicating a current communication environment type based on the algorithm model.

As an alternative of or supplement to the above solution, in the device according to an embodiment of the present disclosure, execution of the computer program also causes the following steps to be performed: D. determining, based on the first determination information, a positioning model parameter for the current communication environment type.

As an alternative of or supplement to the above solution, in the device according to an embodiment of the present disclosure, the algorithm model comprises a threshold classification model, and execution of the computer program causes step C to be executed in the following manner: C1. obtaining a line-of-sight type of a current Ultra Wide Band communication, wherein the line-of-sight type comprises line-of-sight propagation and non-line-of-sight propagation; C2: determining a dispersion parameter threshold corresponding to the line-of-sight type; C3: comparing the channel time dispersion parameter with the dispersion parameter threshold; and C4: determining the current communication environment type based on the comparison results.

As an alternative of or supplement to the above solution, in the device according to an embodiment of the present disclosure, the thresholds for the mean excess delay and RMS delay spread for non-line-of-sight propagation are greater than the thresholds for the mean excess delay and RMS delay spread for line-of-sight propagation. respectively.

According to yet another aspect of the present disclosure, a vehicle is provided, comprising: an Ultra Wide Band transmitter; an Ultra Wide Band receiver for detecting Ultra Wide Band signals emitted by the Ultra Wide Band transmitter; and any one of the data processing devices as described above.

According to still another aspect of the present disclosure, a computer-readable storage medium for storage of a computer program is provided, where when the program is executed by a processor, any one of the methods described above is implemented.

Firstly, the communication environment determination solution proposed by the present disclosure can utilize Ultra Wide Band technology for channel detection. Since Ultra Wide Band signals employ narrow pulses with extremely short duration, the temporal and spatial resolution thereof is strong, resulting in extremely high multipath resolution, which can improve the accuracy of channel detection while obtaining strong anti-fading ability.

Secondly, the communication environment determination solution proposed by the present disclosure cleverly utilizes the time dispersion characteristics of multipath effects, and further utilizes prior knowledge based on channel time dispersion parameters (such as the mean excess delay and RMS delay spread of non-line-of-sight propagation being greater than those of line-of-sight propagation, the mean excess delay and RMS delay spread of outdoor environment being greater than those of indoor environment, and the number of multipath components of outdoor environment being less than that of indoor environment) to build an algorithm model for determination of the communication environment type, thereby effectively improving the efficiency and accuracy of environment determination.

## BRIEF DESCRIPTION OF THE DRAWINGS

The above and/or other aspects and advantages of the present disclosure will become clearer and easier to understand through the following description of various aspects in conjunction with the accompanying drawings, where the same or similar units are denoted by the same reference numerals in the figures. The accompanying drawings comprising:

FIG. 1 is a schematic flowchart of a communication environment determination method 10 according to an embodiment of the present disclosure;

FIG. 2 is a schematic block diagram of a data processing device 20 for determination of a communication environment type according to an embodiment of the present disclosure; and

FIG. 3 is a schematic block diagram of a vehicle 30 according to an embodiment of the present disclosure.

## DETAILED DESCRIPTION

In this specification, the present disclosure is described more comprehensively with reference to the accompanying drawings which illustrate exemplary embodiments of the present disclosure. However, the present disclosure can be implemented in different forms and should not be construed as being limited to the various embodiments set forth herein. The various embodiments set forth herein are intended to make the disclosure of the present disclosure comprehensive and complete, so as to convey the scope of protection of the present disclosure to those skilled in the art in a more comprehensive manner.

It should be noted that the terms "first", "second", etc. used herein are intended to distinguish similar objects and do not necessarily describe the order of the objects in terms of time, space, size, and the like. In addition, unless otherwise specified, the terms "include", "possess", and similar expressions herein are intended to indicate non-exclusive inclusion.

In this specification, the term "vehicles" or other similar terms include ordinary motor vehicles, such as passenger cars (including sport utility vehicles, buses, trucks, etc.), various commercial vehicles, etc., and include hybrid vehicles, electric vehicles, plug-in hybrid electric vehicles, and others. Hybrid vehicles are a type of vehicles with two or more power sources, such as gasoline-electric hybrids.

Currently, it is necessary to determine the type of environment in which a device is located (such as indoor or outdoor) in many application scenarios. For example, mobile phones need to flexibly turn on and off WiFi scanning functions based on outdoor or indoor determinations, so as to improve network signals while lowering communication costs. The autopilot system needs to select different positioning information based on the determination of the environment type (for example, if the vehicle is detected to be driving outdoors, the output information of the Global Positioning System (GPS) and Inertial Measurement Unit (IMU) will be fused, and if the vehicle is in an indoor parking lot, the output information of the Ultra Wide Band (UWB) and IMU will be fused) to ensure reliable positioning output. Mobile phones need to report the types of environments they are in, so that operators can accurately determine the coverage of base station signals.

It should be noted that for systems that realize positioning functions based on wireless signal strength (such as WiFi and Bluetooth), the received signal strength is not only related to the distance between signal transceivers, but also to the density of reflectors and scatterers in the surrounding environment. As indoor wireless communication systems operate in environments with a large number of multipath components, the received signal strength is significantly different from the signal strength received outdoors when the distances between signal transceivers are the same. In this case, if the positioning model parameters built according to outdoor propagation environment is used for indoor positioning, this will introduce relatively big errors, and vice versa. Therefore, if the positioning conditions include multiple different environmental scenarios, it is necessary to first determine the type of environment in which the current system is located, so as to select positioning model parameters specific to that environment type to improve the positioning accuracy of such systems.

It should be appreciated that the communication environment determination solution proposed by the present disclosure is applicable to any scenario where it is necessary to determine the type of environment, including but not limited to the above exemplary scenarios. It should also be appreciated that the communication environment determination solution proposed by the present disclosure is implemented based on Ultra Wide Band technology, and therefore requires the device itself to have Ultra Wide Band communication capabilities (e.g., configured with Ultra Wide Band transceivers), or to have detection or processing capabilities for Ultra Wide Band signals.

Various exemplary embodiments according to the present disclosure will be described in detail hereinafter with reference to the accompanying drawings.

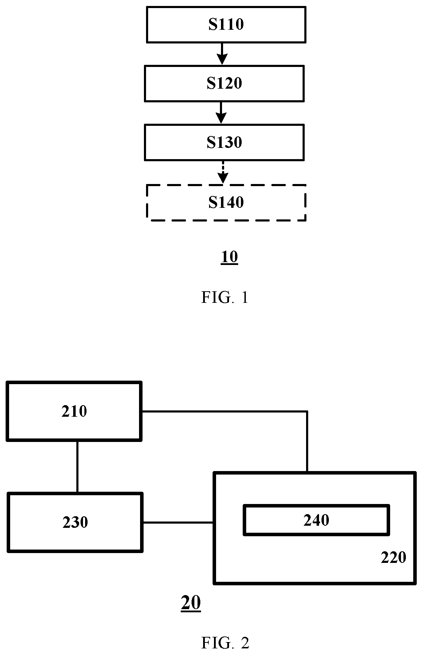

Referring now to FIG. 1, FIG. 1 is a schematic flowchart of a communication environment determination method 10 according to an embodiment of the present disclosure.

In step S110, the channel impulse response in the current Ultra Wide Band communication process is determined based on the Ultra Wide Band signal received. Optionally, the acquisition of Channel Impulse Response (CIR) can be based on measurement methods known in the art, including but not limited to using UWB chips or UWB sniffers with CIR capture capabilities. The present disclosure makes no specific limitations in this regard.

For example, assuming that the transmitted Ultra Wide Band signal is s (t), in a multipath propagation environment with no consideration of noise, the received Ultra Wide Band signal r (t) can be expressed as:

$$r\,(t) = s\,(t) * h\,(t) \qquad (\text{Equation } 1)$$

wherein, h (t) is the channel impulse response in the current Ultra Wide Band communication process, where the channel impulse response h (t) contains the multipath information of the current channel and can be expressed as:

$$h(t) = \sum_{n=1}^{K} a_n \delta(t - \tau_n) \qquad (\text{Equation } 2)$$

Here, $\delta$ (t) is the Dirac function, K is the number of multipath components, $a_n$ is the gain factor (i.e., amplitude) of the nth multipath component, and $\tau_n$ is the delay of the nth multipath component relative to the first multipath component.

In step S120, the channel time dispersion parameter is calculated based on the channel impulse response. For example, the channel time dispersion parameter includes one or more of the following: the number of multipath components, the amplitude and delay of each multipath component, the mean excess delay, the RMS (Root Mean Square) delay spread, and the maximum multipath delay.

Optionally, signal processing techniques can be utilized to extract the time dispersion parameters of multipath channels in the channel impulse response h (t). By way of example, the number K of multipath components, the amplitude $a_n$ of each multipath component, and the delay $\tau_n$ in h (t) can be extracted according to the above Equation 2, and the mean excess delay, the RMS delay spread, and the maximum multipath delay can be calculated based on K, $a_n$, and $\tau_n$.

The mean excess delay $\tau_{mean}$ and the RMS delay spread $\tau_{rms}$ of multipath channel are the first moment and the square root of second moment of the channel impulse response, respectively. The specific calculation formulae are as follows:

$$\tau_{mean} = \frac{\sum_{n=1}^{K} a_n^2 \tau_n}{\sum_{n=1}^{K} a_n^2} \qquad \text{(Equation 3)}$$

$$\tau_{rms} = \sqrt{\overline{\tau^2} - (\tau_{mean})^2} \qquad \text{(Equation 4)}$$

$$\text{wherein, } \overline{\tau^2} = \frac{\sum_{n=1}^{K} a_n^2 \tau_n^2}{\sum_{n=1}^{K} a_n^2} \qquad \text{(Equation 5)}$$

In step S130, the channel time dispersion parameter is input into the algorithm model, and the first determination information indicating the current communication environment type is generated based on the algorithm model.

For example, the current communication environment types include indoor and outdoor. In order to more specifically depict the environment in which the device is located, the environmental types can be further divided into outdoor open spaces, outdoor semi-open spaces, light indoor spaces (such as those with open doors and windows), deep indoor spaces (indoor spaces without windows), and the like.

The algorithm model in step S130 is built based on prior knowledge of channel time dispersion parameters. For example, the number of reflectors varies in different types of communication environments (such as indoor and outdoor). There are a large number of reflectors (such as walls, ceilings, floors, furniture, items, etc.) in indoor environments, which leads to multiple reflections of Ultra Wide Band signals in indoor spaces. A large number of signals reach the receiver along multiple reflection paths, resulting in a higher number of multipath components in indoor environments than in outdoor environments. Secondly, for outdoor environments, reflected and scattered signals usually need to travel a relatively long path to reach the receiver, resulting in larger mean excess delay and RMS delay spread compared to those of indoor environments. Furthermore, the above channel time dispersion parameters are also related to the line-of-sight types of current Ultra Wide Band communication, wherein the line-of-sight types include line-of-sight (LOS) propagation and non-line-of-sight (NLOS) propagation, depending on the actual arrangement of Ultra Wide Band transceivers on the equipment in the specific application. Normally, the mean excess delay and RMS delay spread of NLOS propagation are greater than those of LOS propagation.

By way of example, different algorithm models can be built in advance based on the aforementioned prior knowledge, including but not limited to threshold classification models and machine learning models.

If a threshold classification model is used, the current communication environment type can be determined based on the following steps S131-S134.

In step S131, the line-of-sight type of the current Ultra Wide Band communication is obtained. As mentioned above, the line-of-sight type of Ultra Wide Band communication depends on the actual arrangement between Ultra Wide Band transceivers, so the line-of-sight type can be pre-stored as known information in the data processing device.

In step S132, the dispersion parameter threshold corresponding to the line-of-sight type is determined. Based on the prior knowledge mentioned above, it can be seen that the thresholds of the mean excess delay and RMS delay spread for non-line-of-sight propagation are greater than those for line-of-sight propagation. For example, for NLOS propagation, the threshold of the mean excess delay $\tau_{mean}$ is 32 ns and that of the RMS delay spread $\tau_{rms}$ is 21 ns, while for LOS propagation, the threshold of the mean excess delay $\tau_{mean}$ is 21 ns and that of the RMS delay spread is 18 ns.

It should be noted that the numerical ranges of the preset values (such as dispersion parameter threshold, etc.) described herein can be set according to actual needs, and are not limited to the numerical ranges shown in this embodiment.

In step S133, the channel time dispersion parameter is compared with the dispersion parameter threshold. Optionally, the above comparison can be made for one or more of the mean excess delay $\tau_{mean}$, RMS delay spread $\tau_{rms}$, number of multipath components K, and maximum multipath delay.

In step S134, the current communication environment type is determined based on the above comparison results.

For example, for NLOS propagation, if the mean excess delay $\tau_{mean}$ is greater than the first threshold (e.g., 32 ns), the RMS delay spread $\tau_{rms}$ is greater than the second threshold (e.g., 21 ns), the number of multipath components K is less than the third threshold, and the maximum multipath delay is greater than the fourth threshold, the current communication environment type can then be determined to be outdoors, otherwise it is indoors. For example, for LOS propagation, if the RMS delay spread $\tau_{rms}$ is greater than the fifth threshold (e.g., 18 ns), the number of multipath components K is less than the sixth threshold, and the maximum multipath delay is greater than the seventh threshold, it can then be determined that the current communication environment type is outdoors, otherwise it is indoors.

Optionally, the algorithm model in step S130 can be a machine learning model, which is built based on a training dataset containing samples of channel time dispersion parameter and labeling information representing the communication environment type corresponding to the samples. For example, first, a channel time dispersion parameter dataset obtained in advance (e.g., one or more of the mean excess delay $\tau_{mean}$, RMS delay spread $\tau_{rms}$, the number K of multipath components, maximum multipath delay, line-of-sight type) is used as training samples, and a communication environment type label (e.g., indoor or outdoor) is assigned to it, thereby obtaining a classification model through training. For example, the classification algorithms used by the model include but are not limited to multi-layer perceptrons, decision trees, support vector machines, nearest neighbor algorithms, and Naive Bayes. For example, the output layer of the machine learning model can directly output "1" or "0" to indicate whether the current communication environment type is outdoor or indoor.

Optionally, in step S140, the positioning model parameters for the current communication environment type is determined based on the first determination information.

As mentioned earlier, for systems that realize positioning functions based on wireless signal strength (such as WiFi and Bluetooth), it is necessary to select positioning model parameters specific to the current environment type of the system, so as to improve the positioning accuracy of such systems. For example, the positioning model may be a positioning model for Passive Entry and Passive Start (PEPS) systems.

With continued reference to FIG. 2, FIG. 2 is a schematic block diagram of a data processing device 20 for determination of the communication environment type according to an embodiment of the present disclosure. The device 20 shown in FIG. 2 can be used to implement the method shown in FIG. 1.

As shown in FIG. 2, the data processing device 20 comprises a communication unit 210, a memory 220 (e.g., non-volatile memory such as flash memory, ROM, hard disk drive, magnetic disk, optical disk, etc.), a processor 230 (such as microprocessor, microcontroller, etc.), and a computer program 240 stored on the memory 220 and executable on the processor 230.

The communication unit 210 serves as a communication interface, which is configured to establish a communication connection between the device and external devices or networks (such as UWB transceivers).

The memory 220 stores a computer program 240 that can be executed by the processor 230. Processor 230 is configured to execute the computer program 240 to implement the corresponding communication environment determination process. The communication environment determination process has been described in detail previously, and thus will not be repeated here.

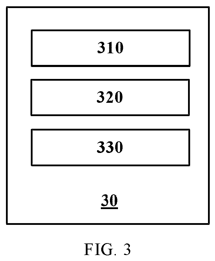

FIG. 3 is a schematic block diagram of a vehicle 30 according to an embodiment of the present disclosure. As shown in FIG. 3, the vehicle 30 comprises an Ultra Wide Band transmitter 310, an Ultra Wide Band receiver 320, and a data processing device 330, wherein the data processing device 330 can be used to implement the method shown in FIG. 1.

The Ultra Wide Band transmitter 310 and the Ultra Wide Band receiver 320 have the ability to transmit and receive UWB communication signals, respectively. For example, the Ultra Wide Band transmitter 310 and the Ultra Wide Band receiver 320 may comprise multiple Ultra Wide Band transceivers and/or multiple Ultra Wide Band antennas arranged in arrays.

Optionally, the Ultra Wide Band transmitter 310 and the Ultra Wide Band receiver 320 can be arranged to have a line-of-sight path or a non-line-of-sight path. For example, the Ultra Wide Band transmitter 310 and the Ultra Wide Band receiver 320 can be symmetrically mounted on the outer side of the B-pillars on both sides of the vehicle. For another example, the Ultra Wide Band transmitter 310 and the Ultra Wide Band receiver 320 can also be mounted on the left front and left rear of the vehicle, respectively. In other embodiments, a line-of-sight path may be provided between the Ultra Wide Band transmitter 310 and the Ultra Wide Band receiver 320, i.e., there is no obstruction between the two.

According to another aspect of the present disclosure, a computer-readable storage medium for storing a computer program, which, when executed by a processor, implements the method shown in FIG. 1 is further provided. The computer-readable storage medium may comprise random access memory (RAM), such as synchronous dynamic random access memory (SDRAM), read-only memory (ROM), non-volatile random access memory (NVRAM), electrically erasable programmable read-only memory (EEPROM), flash memory, and other known storage medium.

Some embodiments according to the present disclosure can utilize Ultra Wide Band technology for channel detection. Since Ultra Wide Band signals employ narrow pulses with extremely short duration, the temporal and spatial resolution thereof is strong, resulting in extremely high multipath resolution, which can improve the accuracy of channel detection while obtaining strong anti-fading ability.

Some embodiments according to the present disclosure cleverly utilize the time dispersion characteristics of multipath effects, and further utilize prior knowledge based on channel time dispersion parameters (such as the mean excess delay and RMS delay spread of non-line-of-sight propagation being greater than those of line-of-sight propagation, the mean excess delay and RMS delay spread of outdoor environment being greater than those of indoor environment, and the number of multipath components of outdoor environment being less than that of indoor environment) to build an algorithm model for determination of the communication environment type, thereby effectively improving the efficiency and accuracy of environment determination.

It should be appreciated that some of the block diagrams shown in the accompanying drawings of the present disclosure are functional entities and do not necessarily correspond to physically or logically independent entities. These functional entities can be implemented in the form of software, or implemented in one or more hardware modules or integrated circuits, or implemented in different networks and/or processor devices and/or microcontroller devices.

It should also be appreciated that in some alternative embodiments, the functions/steps included in the aforementioned methods may not occur in the orders shown in the flowcharts. For example, the two functions/steps shown in sequence can be executed almost simultaneously or even in reverse order. This depends on the specific functions/steps involved.

In addition, those skilled in the art can easily appreciate that the methods provided by one or more embodiments of the present disclosure can be implemented through computer programs. For example, when a computer storage medium (such as a USB flash disk) storing a computer program is connected to a computer, running the computer program can execute the methods of one or more embodiments of the present disclosure.

Although only some embodiments of the present disclosure have been described above, those skilled in the art should appreciate that the present disclosure can be implemented in many other forms without departing from the spirit and scope thereof. Therefore, the examples and embodiments shown are considered illustrative rather than restrictive, and the present disclosure may encompass various modifications and substitutions without departing from the spirit and scope of the present disclosure as defined by the appended claims.

**Claims**

1. A communication environment determination method based on Ultra Wide Band, comprising steps of:

   A. determining, based on a received Ultra Wide Band signal, a channel impulse response in a current Ultra Wide Band communication process;
   B. calculating, based on the channel impulse response, channel time dispersion parameters; and
   C. inputting the channel time dispersion parameters into an algorithm model, and generating first determination information indicating a current communication environment type based on the algorithm model.

2. The method according to claim 1, further comprising:
   D. determining, based on the first determination information, positioning model parameters for the current communication environment type.

3. The method according to claim 1, wherein the channel time dispersion parameters comprise one or more of the following: number of multipath components, amplitude and delay of each multipath component, mean excess delay, RMS delay spread, and maximum multipath delay.

4. The method according to claim 1, wherein the algorithm model comprises a machine learning model, where the machine learning model is built based on a training dataset containing samples of channel time dispersion parameter and labeling information representing the communication environment type corresponding to the samples.

5. The method according to claim 1, wherein the algorithm model comprises a threshold classification model, and step C comprises:

   C1: obtaining a line-of-sight type of current Ultra Wide Band communication, wherein the line-of-sight type comprises line-of-sight propagation and non-line-of-sight propagation;
   C2: determining a dispersion parameter threshold corresponding to the line-of-sight type;
   C3: comparing the channel time dispersion parameter with the dispersion parameter threshold; and
   C4: determining the current communication environment type based on comparison results.

6. The method according to claim 5, wherein thresholds for the mean excess delay and RMS delay spread for non-line-of-sight propagation are greater than thresholds for the mean excess delay and RMS delay spread for line-of-sight propagation, respectively.

7. The method according to claim 1, wherein the current communication environment types include indoor and outdoor.

8. A data processing device for determination of communication environment type, comprising:

a memory;
a processor; and
a computer program stored on the memory and executable on the processor, wherein execution of the computer program causes following steps to be performed:

A. determining, based on a received Ultra Wide Band signal, a channel impulse response in a current Ultra Wide Band communication process;
B. calculating, based on the channel impulse response, channel time dispersion parameters; and
C. inputting the channel time dispersion parameters into an algorithm model, and generating first determination information indicating a current communication environment type based on the algorithm model.

9. The device according to claim 8, wherein execution of the computer program further causes following steps to be executed:
D. determining, based on the first determination information, a positioning model parameter for the current communication environment type.

10. The device according to claim 8, wherein the algorithm model comprises a threshold classification model, and execution of the computer program causes step C to be executed in following manner:

C1. obtaining a line-of-sight type of current Ultra Wide Band communication, wherein the line-of-sight type comprises line-of-sight propagation and non-line-of-sight propagation;
C2: determining a dispersion parameter threshold corresponding to the line-of-sight type;
C3: comparing the channel time dispersion parameter with the dispersion parameter threshold; and
C4: determining a current communication environment type based on comparison results.

11. The device according to claim 10, wherein thresholds for the mean excess delay and RMS delay spread for non-line-of-sight propagation are greater than thresholds for the mean excess delay and RMS delay spread for line-of-sight propagation, respectively.

12. A vehicle, comprising:

an Ultra Wide Band transmitter;
an Ultra Wide Band receiver for detecting Ultra Wide Band signals emitted by the Ultra Wide Band transmitter; and
the data processing device according to any of claims 8-11.

13. A computer-readable storage medium for storage of instructions, wherein when the instructions are executed by a processor, the processor is made to implement the method according to any of claims 1-7.

```
┌─────────────────────┐
│        S110         │
└─────────────────────┘
           │
           ▼
┌─────────────────────┐
│        S120         │
└─────────────────────┘
           │
           ▼
┌─────────────────────┐
│        S130         │
└─────────────────────┘
           ┊
           ▼
┌ ─ ─ ─ ─ ─ ─ ─ ─ ─ ─ ┐
         S140
└ ─ ─ ─ ─ ─ ─ ─ ─ ─ ─ ┘
```

<u>10</u>

FIG. 1

```
┌───────────┐
│    210    │───────────────────┐
└───────────┘                   │
      │                         │
      │              ┌──────────┼──────────┐
┌───────────┐        │     ┌─────────────┐ │
│    230    │────────┼─────│     240     │ │
└───────────┘        │     └─────────────┘ │
                     │               220   │
                     └─────────────────────┘
```

<u>20</u>

FIG. 2

FIG. 3

**INTERNATIONAL SEARCH REPORT**

| International application No. |
| --- |
| **PCT/CN2023/104867** |

### A. CLASSIFICATION OF SUBJECT MATTER

H04W 24/02(2009.01)i；　H04W 24/08(2009.01)i

According to International Patent Classification (IPC) or to both national classification and IPC

### B. FIELDS SEARCHED

Minimum documentation searched (classification system followed by classification symbols)

IPC：H04W,H04L,H04B

Documentation searched other than minimum documentation to the extent that such documents are included in the fields searched

Electronic data base consulted during the international search (name of data base and, where practicable, search terms used)

CNKI, CNTXT, ENTXTC, DWPI, IEEE: 车, 超宽带, UWB, 信道, 响应, 冲击, 冲激, 脉冲, 时间, 时延, 多径, 模型, car, vehicle, ultra wide band, channel, response, impulse, CIR, time, delay, multi path, model

### C. DOCUMENTS CONSIDERED TO BE RELEVANT

| Category* | Citation of document, with indication, where appropriate, of the relevant passages | Relevant to claim No. |
| --- | --- | --- |
| PX | CN 115278731 A (NIO AUTOMOBILE TECHNOLOGY (ANHUI) CO., LTD.) 01 November 2022 (2022-11-01)<br>claims 1-13 | 1-13 |
| X | CN 113614796 A (ROBERT BOSCH CO., LTD.) 05 November 2021 (2021-11-05)<br>claims 1-20, and description, paragraphs [0011]-[0056] | 1-13 |
| A | CN 114224387 A (SOUTH CHINA UNIVERSITY OF TECHNOLOGY) 25 March 2022 (2022-03-25)<br>entire document | 1-13 |
| A | CN 111951434 A (ROBERT BOSCH CO., LTD.) 17 November 2020 (2020-11-17)<br>entire document | 1-13 |
| A | WO 2019138156 A1 (NOKIA TECHNOLOGIES OY) 18 July 2019 (2019-07-18)<br>entire document | 1-13 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **07 October 2023** | **12 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104867**

| Patent document cited in search report | | | Publication date (day/month/year) | Patent family member(s) | | | Publication date (day/month/year) |
|---|---|---|---|---|---|---|---|
| CN | 115278731 | A | 01 November 2022 | None | | | |
| CN | 113614796 | A | 05 November 2021 | EP | 3948805 | A1 | 09 February 2022 |
| | | | | WO | 2020200910 | A1 | 08 October 2020 |
| | | | | US | 2020309932 | A1 | 01 October 2020 |
| CN | 114224387 | A | 25 March 2022 | None | | | |
| CN | 111951434 | A | 17 November 2020 | US | 2020348406 | A1 | 05 November 2020 |
| WO | 2019138156 | A1 | 18 July 2019 | EP | 3738281 | A1 | 18 November 2020 |

Form PCT/ISA/210 (patent family annex) (July 2022)